# EUROPÄISCHE PATENTANMELDUNG

(11) **EP 1 571 048 A2**
(43) Veröffentlichungstag der Anmeldung: **07.09.2005**
(21) Anmeldenummer: 04030901.5
(22) Anmeldetag: 28.12.2004
(51) Int. Cl.: B60R 21/20

(54) **Gassack-Modul, insbesondere für einen Knie-Gassack**

(30) Priorität: 05.03.2004 DE 102004010869
(71) Anmelder: TRW Automotive GmbH, 73553 Alfdorf (DE)
(72) Erfinder: Freisler, Werner, 89551 Königsbrunn (DE); Zischka, Gerd, 73527 Schwäbisch Gmünd (DE)
(74) Vertreter: Strass, Jürgen

(57) **Zusammenfassung**

Ein Gassack-Modul (10), insbesondere für einen Knie-Gassack, umfaßt ein Gehäuse (12), einen Gasgenerator (16) und einen Gassack (14). Der Gasgenerator (16) und der Gassack (14) bilden eine Einheit, die im Inneren des Gehäuses (12) schwimmend gelagert ist.

## Beschreibung

Die Erfindung betrifft ein Gassack-Modul, insbesondere für einen Knie-Airbag, mit einem Gehäuse, einem Gasgenerator und einem Gassack.

Ein Knie-Airbag wird insbesondere bei Kraftfahrzeugen verwendet, die für den US-Markt vorgesehen sind oder für Länder, in welchen keine Gurtpflicht existiert. Durch den Knie-Airbag können bei einem Frontalaufprall die Knie des Fahrzeuginsassen zurückgehalten werden. Dies verhindert, daß der Fahrzeuginsasse in dem Bereich unter den Instrumententräger rutscht. Der Oberkörper des Fahrzeuginsassen wird von einem herkömmlichen Gassack aufgefangen.

Üblicherweise werden bei einem Knie-Gassack die Einzelteile des Moduls an einer aus Metall bestehenden Befestigungsplatte montiert. Diese nimmt im Falle einer Aktivierung des Gassacks sämtliche Reaktionskräfte auf und stützt den Gassack gegenüber dem Fahrzeuginsassen ab. Weiterhin dient die Befestigungsplatte als Gehäuse und damit als Schutzabdeckung gegenüber Beschädigungen und Verschmutzungen der Einzelteile. Außerdem kann sie konstruktiv so ausgeführt sein, daß sie als Schußkanal wirkt.

Eine solche metallische Befestigungsplatte wird in der Regel von der Rückseite des Instrumententrägers aus montiert, also von der nicht sichtbaren, dem Motorraum zugewandten Seite. Auf der dem Fahrzeuginnenraum zugewandte Seite tritt der Gassack durch eine Öffnung im Instrumententräger aus. Diese Öffnung ist meist durch eine Klappe verschlossen, die mit einer Reißlinie versehen ist.

Ebenfalls bekannt ist, die Befestigungsplatte mit einer Sichtabdeckung auszustatten und das Gassack-Modul von vorne im Instrumententräger zu montieren. In der Sichtabdeckung ist ein Öffnungsmechanismus vorgesehen, durch den der Gassack hindurch austritt.

Beide Lösungen haben den Nachteil, daß sie einen großen Bauraum erfordern, ein hohes Gewicht haben und eine aufwendige Montage erfordern. Besonders kritisch ist, daß die unvermeidbaren Herstellungstoleranzen aufwendig ausgeglichen werden müssen. Insgesamt ergeben sich hohe Herstellungskosten.

Die Aufgabe der Erfindung besteht darin, ein Gassack-Modul insbesondere für einen Knie-Gassack zu schaffen, das sich durch geringe Herstellungskosten auszeichnet.

Zur Lösung dieser Aufgabe ist erfindungsgemäß vorgesehen, daß der Gasgenerator und der Gassack eine Einheit bilden, die im Inneren des Gehäuses schwimmend gelagert ist. Dieses Gassack-Modul zeichnet sich dadurch aus, daß kein aufwendiger Toleranzausgleich erforderlich ist. Das Gehäuse wird im Instrumententräger montiert. Der Gasgenerator mit dem daran angebrachten Gassack kann an einem ihm zugeordneten Träger montiert werden, beispielsweise einem Querholm im Inneren des Instrumententrägers. Da der Gasgenerator und der Gassack schwimmend im Inneren des Gehäuses gelagert sind, können eventuelle Herstellungstoleranzen automatisch ausgeglichen werden; der Gasgenerator und der Gassack ordnen sich von alleine in der jeweils notwendigen Position im Inneren des Gehäuses an. Auf diese Weise ergibt sich ein einfacher Aufbau, der sich durch geringes Gewicht und geringe Herstellungskosten auszeichnet.

Das Gehäuse besteht vorzugsweise aus Kunststoff. Es umschließt die Einheit aus Gasgenerator und Gassack, so daß diese vor äußeren Einflüssen wie Staub, Schmutz, Stößen etc. geschützt sind. Durch eine geeignete konstruktive Auslegung des Gehäuses, insbesondere durch geeignete Wahl der Wandstärken sowie das Vorsehen von Verstärkungsrippen, kann das Gehäuse die Funktion eines Schußkanals haben. Außerdem ist die Aufnahme von Reaktionskräften möglich.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 einen Querschnitt durch ein erfindungsgemäßes Gassack-Modul, eingesetzt in einen Instrumententräger;
- die Figuren 2 bis 4 verschiedene Schritte des Zusammenbaus des Gassack-Moduls;
- Figur 5 die Einheit aus Gasgenerator und Gassack angeordnet im Inneren des Gehäuses;
- Figur 6 die Montage des montierten Gassack-Moduls in einen Instrumententräger;
- die Figuren 7 und 8 verschiedene Ansichten des montierten Gassack-Moduls; und
- die Figuren 9 bis 11 die zum Verschließen des Gehäuses verwendeten Rastlaschen vor dem Verschließen, während des Verschließens und nach dem Verschließen.

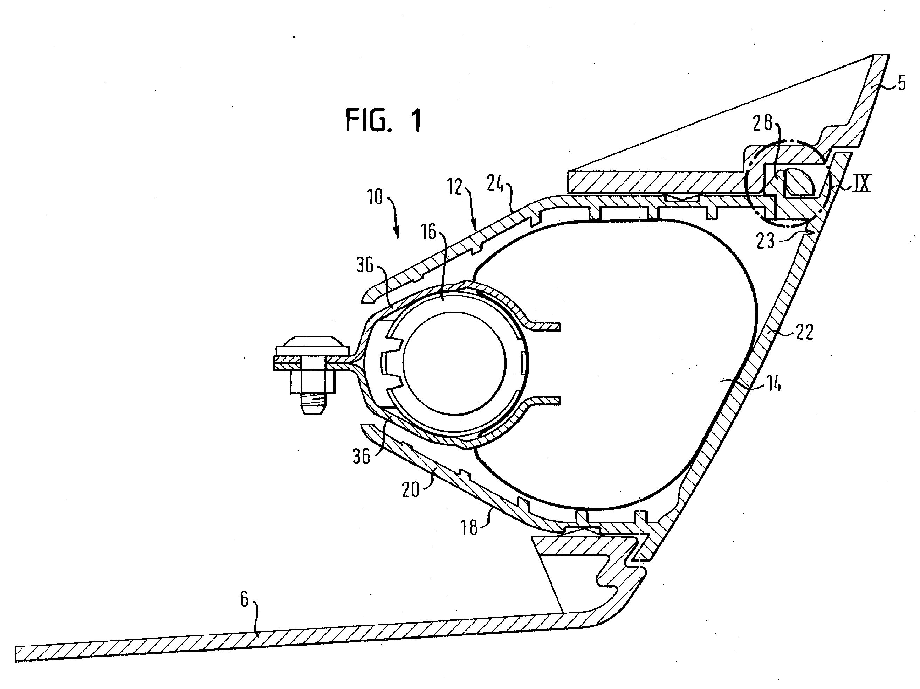

In Figur 1 ist ein Instrumententräger 5 gezeigt, der beispielsweise fahrerseitig Instrumente wie einen Tachometer oder ein Drehzahlmesser trägt oder beifahrerseitig ein Handschuhfach. Im unteren Bereich des Instrumententrägers 5, also im Bereich des Übergangs zu einem zum Fußraum gerichteten Abschnitt 6, ist ein Gassack-Modul 10 vorgesehen, das ein Gehäuse 12, einen Gassack 14 sowie einen Gasgenerator 16 aufweist. Der Gasgenerator 16 dient dazu, nach Aktivierung ein Volumen von unter Druck stehendem Gas bereitzustellen, welches in den Gassack 14 geleitet wird, damit dieser sich aus einem kompakt zusammengefalteten Ausgangszustand entfaltet, so daß er eine Rückhaltewirkung für einen Fahrzeuginsassen bereitstellen kann.

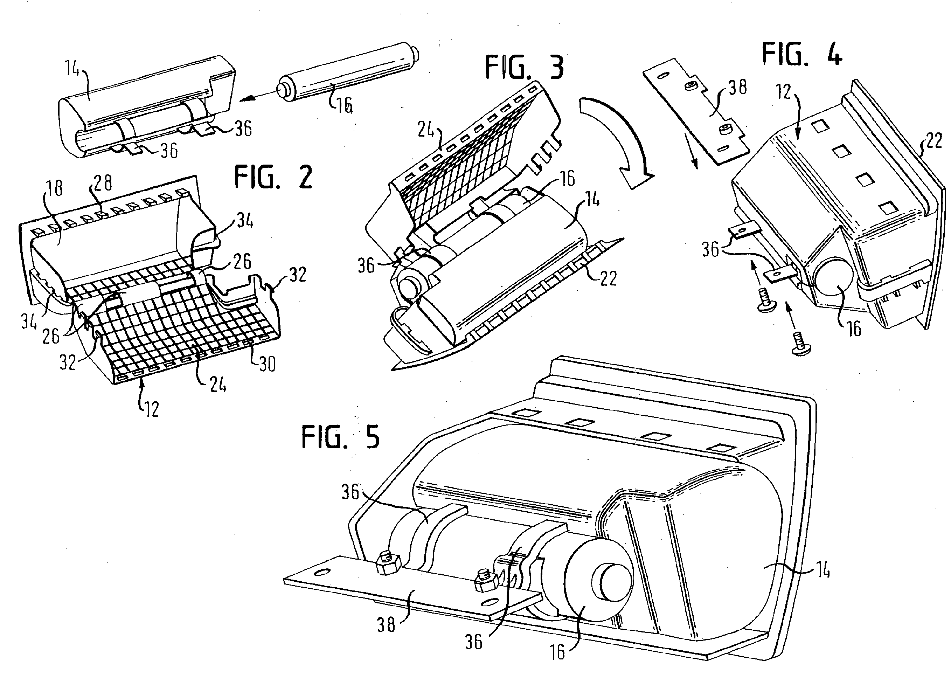

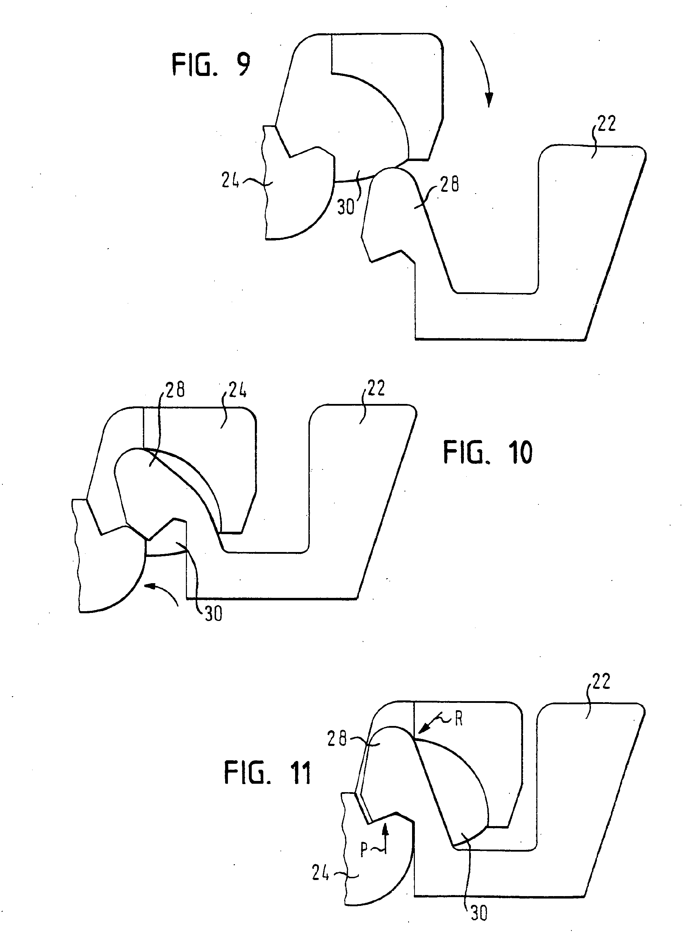

Das Gehäuse 12 (siehe auch Figur 2) besteht aus zwei Teilen, nämlich einem wannenartigen ersten Gehäuseteil 18 mit einer Seitenwand 20 und einer Frontwand 22, sowie einem zweiten Gehäuseteil 24, welches eine zweite Seitenwand darstellt. Die beiden Gehäuseteile 18, 24 sind durch mehrere Filmscharniere 26 einstückig miteinander verbunden. Entlang dem Rand der Frontwand 22 sind eine Vielzahl von Rastlaschen 28 (siehe auch Figur 9) vorgesehen, denen Öffnungen 30 am vom Filmscharnier 26 entgegengesetzten Rand des zweiten Gehäuseteils 24 zugeordnet sind. An den Stirnseiten des zweiten Gehäuseteils sind außerdem Haken 32 vorgesehen, die in Öffnungen 34 an den Stirnseiten des ersten Gehäuseteils 18 eingreifen können.

Zur Montage wird der Gasgenerator 16 in zwei Haltelaschen 36 eingeschoben, die an einem (nicht dargestellten) Halteblech im Inneren des gefalteten Gassacks 14 angebracht sind. Die auf diese Weise gebildete Einheit wird in das Gehäuse 12 eingelegt, und zwar in das wannenartige Gehäuseteil 18 (siehe Figur 3). Dabei liegt der gefaltete Gassack 14 an der Frontwand 22 an, und die Haltelaschen 36 erstrecken sich durch den Bereich zwischen den beiden Gehäuseteilen 18, 24 nach außen, also zwischen den Filmscharnieren 26 hindurch. Dann wird das zweite Gehäuseteil 24 umgeklappt, so daß die Rastlaschen 28 und die Haken 32 durch die entsprechenden Öffnungen hindurchtreten. Dies ist in den Figuren 9 bis 11 für die Rastlaschen 28 im Detail gezeigt.

Die Rastlaschen 28 treten in die Öffnungen 30 am zweiten Gehäuseteil 24 ein und werden durch die spezielle, kanalartige Form der Öffnungen 30 abgeknickt (siehe Figur 10), bis sie vollständig durch die Öffnung 30 hindurchgetreten sind. Dann richten sie sich wieder auf (siehe Figur 11), so daß sie sich an einer Rastlasche abstützen. Falls auf das zweite Gehäuseteil 24 eine Kraft ausgeübt würde, die das Gehäuse zu öffnen versucht, greift die Rastlasche 28 an einem hinter der Öffnung liegenden Absatz an, der von der Rastlasche 28 zurückgehalten wird (siehe Pfeil P von Figur 11). Die dabei auf die Rastlasche 28 ausgeübte Kraft versucht, diese bezüglich Figur 11 im Uhrzeigersinn aufzubiegen. Dem wirkt eine Abstützkante hinter der Öffnung 30 am zweiten Gehäuseteil entgegen (siehe Pfeil R). Das Gehäuse wird somit zuverlässig geschlossen gehalten.

An den aus dem Gehäuse 12 herausragenden Haltelaschen 36 kann noch ein Verankerungsblech 38 (siehe die Figuren 4 und 5) angebracht werden.

Bei geschlossenem Gehäuse 12 liegt die von dem gefalteten Gassack 14 und dem Gasgenerator 16 gebildete Einheit frei beweglich im Inneren des Gehäuses 12. Die sich durch den Spalt zwischen dem ersten und dem zweiten Gehäuseteil 18, 24 nach außen erstreckenden Haltelaschen 36 sind in diesem Spalt in jeder räumlichen Richtung bewegbar.

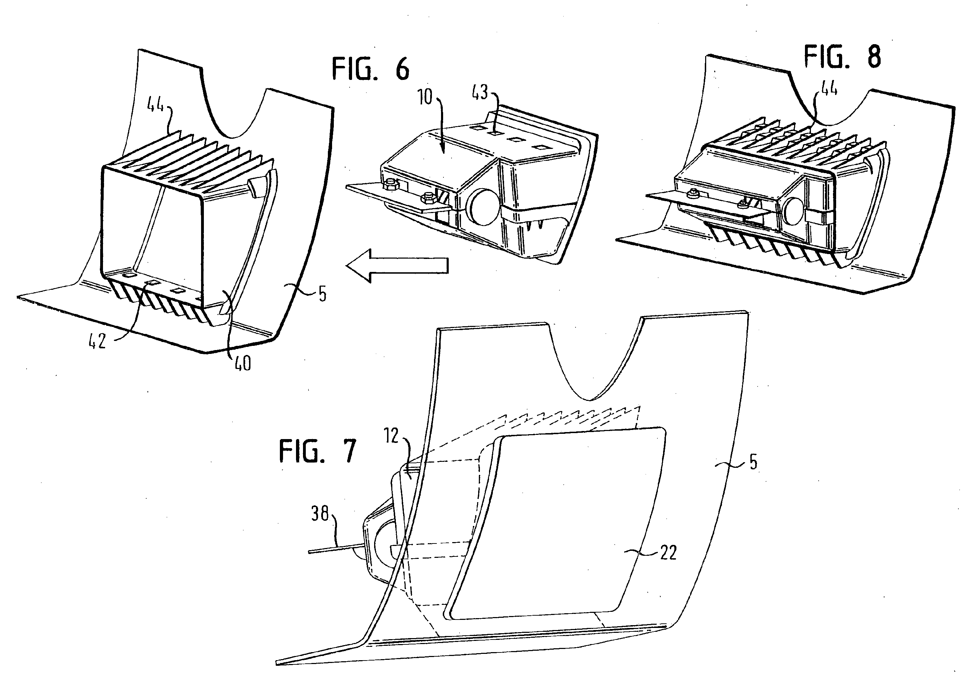

Der Instrumententräger 5 ist mit einer Aufnahme 40 (siehe Figur 6) versehen, in die das Gassack-Modul 10 eingesetzt werden kann. Die Aufnahme 40 ist als umlaufender Rahmen ausgeführt, der an zwei einander gegenüberliegenden Seiten mit Rastvorsprüngen 42 versehen ist, die in Rastaussparungen 44 an den Seitenteilen des Gehäuses 12 eingreifen können. Das Gassack-Modul 10 kann von der Seite des Fahrzeuginnenraumes in die Aufnahme 40 eingeschoben werden (siehe Figur 6), bis die Rastvorsprünge 42 in die Rastaussparungen 44 einrasten. Bei vollständig eingeschobenem Gassack-Modul 10 schließt die Frontwand 22 bündig mit der Außenseite des Instrumententrägers 5 ab (siehe auch Figur 7). In diesem Zustand erstreckt sich das Verankerungsblech 38 auf der Rückseite der Aufnahme 40 (siehe Figur 8), wo es an einem fahrzeugfesten Träger angebracht werden kann.

Nach Aktivierung des Gasgenerators beginnt sich der Gassack 14 zu entfalten. Dadurch wird die Frontwand 22 entlang einer Reißlinie 23 vom Gehäuse 12 getrennt, so daß sie aufklappt und eine Austrittsöffnung für den Gassack 14 freigibt. Der Träger hinter dem Instrumententräger nimmt die Reaktionskräfte bei der Aktivierung des Gassack-Moduls auf.

Aufgrund der schwimmenden Lagerung der von Gassack 14 und Gasgenerator 16 gebildeten Einheit im Inneren des Gehäuses 12 sind keine besonderen Vorkehrungen für einen Toleranzausgleich notwendig; bei der Anbringung der Haltelaschen 36 des Gasgenerators 16 am Träger richtet sich der Gasgenerator zusammen mit dem Gassack automatisch korrekt im Inneren des Gehäuses 12 aus.

Wie in den Figuren 6 und 8 zu sehen ist, ist die Aufnahme 40 auf ihrer Außenseite mit Verstärkungsrippen 44 versehen. Diese dienen zur Stabilisierung, so daß bei Aktivierung des Gassack-Moduls 10 zuverlässig die Reaktionskräfte aufgenommen werden können, die das Gehäuse 12 bezüglich Figur 8 nach oben und nach unten aufzuweiten versuchen. Die vom Austreten des Gassacks 14 resultierenden Reaktionskräfte, die bezüglich Figur 8 in horizontaler Richtung wirken, werden vom Träger aufgenommen.

## Patentansprüche

1. Gassack-Modul (10), insbesondere für einen Knie-Gassack, mit einem Gehäuse (12), einem Gasgenerator (16) und einem Gassack (14), **dadurch gekennzeichnet, daß** der Gasgenerator (16) und der Gassack (14) eine Einheit bilden, die im Inneren des Gehäuses (12) schwimmend gelagert ist.

2. Gassack-Modul nach Anspruch 1, **dadurch gekennzeichnet, daß** das Gehäuse (12) aus Kunststoff besteht.

3. Gassack-Modul nach Anspruch 1 oder Anspruch 2, **dadurch gekennzeichnet, daß** das Gehäuse (12) aus zwei Teilen (18, 24) besteht, die durch ein Filmscharnier (26) miteinander verbunden sind.

4. Gassack-Modul nach Anspruch 3, **dadurch gekennzeichnet daß** eines der Gehäuseteile wannenförmig mit einer Frontwand (22) und einer Seitenwand (20) ausgebildet ist und das zweite Gehäuseteil (24) eine Seitenwand aufweist.

5. Gassack-Modul nach Anspruch 4, **dadurch gekennzeichnet, daß** im Bereich der Frontwand (22) mindestens eine Reißlinie (23) vorgesehen ist.

6. Gassack-Modul nach einem der Ansprüche 3 bis 5, **dadurch gekennzeichnet, daß** die beiden Gehäuseteile (18, 24) miteinander verrastet sind.

7. Gassack-Modul nach einem der Ansprüche 3 bis 6, **dadurch gekennzeichnet, daß** das wannenförmige Gehäuseteil (18) in der Nähe seiner Frontwand (22) mit einer Vielzahl von Rastlaschen (28) versehen ist, die durch Öffnungen (30) im zweiten Gehäuseteil (24) hindurchgreifen.

8. Gassack-Modul nach einem der vorhergehenden Ansprüche, **dadurch gekennzeichnet, daß** am Gasgenerator (16) Haltelaschen (36) angreifen, die sich durch das Gehäuse (12) nach außen erstrecken.

9. Gassack-Modul nach einem der vorhergehenden Ansprüche, **dadurch gekennzeichnet, daß** das Gehäuse (12) in eine Aufnahme (40) in einem Instrumententräger (5) eingesetzt ist.

10. Gassack-Modul nach Anspruch 9, **dadurch gekennzeichnet, daß** das Gehäuse (12) in der Aufnahme (40) einrastet.

11. Gassack-Modul nach einem der Ansprüche 9 und 10, **dadurch gekennzeichnet, daß** die Aufnahme (40) mit Verstärkungsrippen (44) versehen ist.

12. Gassack-Modul nach einem der vorhergehenden Ansprüche, **dadurch gekennzeichnet, daß** das Gehäuse (12) einstückig ausgeführt und die Einheit aus Gasgenerator (16) und Gassack (14) fahrzeugfest angebracht ist.
